# EUROPEAN PATENT SPECIFICATION

(11) **EP 2 105 538 B1**
(45) Date of publication and mention of the grant of the patent: **23.01.2019**
(21) Application number: 09156085.4
(22) Date of filing: 24.03.2009
(51) Int. Cl.: E02F 9/16, B66C 13/54

(54) **Operator's section construction for work vehicle**
Führerstand eines Arbeitsfahrzeugs
Plateforme pour opérateur dans un véhicule de travail

(30) Priority: 27.03.2008 JP 2008084036; 27.03.2008 JP 2008084037; 27.03.2008 JP 2008084038
(43) Date of publication of application: 30.09.2009
(73) Proprietor: Kubota Corporation, Osaka-shi, Osaka 556-8601 (JP)
(72) Inventor: Ueda, Masaaki, Osaka 5900823 (JP); Sakai, Takehiro, Osaka 5900823 (JP)
(74) Representative: Cummings, Sean Patrick

(56) References cited:
- EP-A2- 1 589 153
- DE-U1- 9 204 392
- JP-A- 2007 303 213

## Description

### [TECHNICAL FIELD]

The present invention relates to an operator's section construction for a work vehicle such as a backhoe, a skid loader, a track loader, for use in construction works, civil engineering works, etc.

### [BACKGROUND ART]

With this type of conventional technique, a traveling machine includes an excavator device attached to a front portion of a swiveling deck mounted to be swivellable about a vertical axis, an operating deck fixed on the swiveling deck, a driver's seat mounted on the operating deck, an engine mounted to a rear portion of the swiveling deck, an operational oil tank mounted to a right side portion of the swiveling deck, and right and left controlling devices disposed on the right and left sides of the driver's seat. The right and left controlling devices include a main control valve operated by a control lever to allow such operations as a swiveling operation of the swivel deck, operations of a boom, an arm and a bucket of the excavator device, etc. (See JP2002-149255A).

JP2007-303213 proposes a vertically-oriented bracket disposed in a space beneath an operating device for supporting hoses in an accessible manner in an operator's section of a work vehicle.

### [Summary of the Invention]

### [Problem To Be Solved by Invention]

The operating deck of the conventional technique includes an upper face section and right and left leg sections, with the driver's seat being mounted on the upper face section, the left operating device being attached to the left side face and the right operating device being attached to the right side face, respectively. Hence, it is necessary to fix by e.g. bolts, the right and left operating devices to the operating deck from the right and left sides thereof. Further, the maintenance of the right and left operating devices is difficult and the space below them is a dead space being unutilized. Moreover, although space is available inside the operating deck, it is difficult to accommodate a large vehicle instrument therein.

The object of the invention is to provide an operator's section construction for a work vehicle which can overcome the above drawbacks of the prior art.

### [Means to Solve Problems]

According to an aspect of the present invention, there is provided an operator's section construction for a work vehicle, comprising:
an operating deck mounted on a vehicle body;
a driver's seat mounted on the operating deck;
a first operating device provided on a left side of the operating deck;
a second operating device provided on a right side of the operating deck;
wherein on an upper face of the operating deck, there are formed a mounting portion for the driver's seat, a mounting portion for the first operating device, and a mounting portion for the second operating device; the driver's seat, the first operating device and the second operating devices being mounted on the respective mounting portions independently of each other.

In the above-described construction, said operating deck includes a substantially flat upper face portion, a left leg portion and a right leg portion. Said left leg portion extends downwardly from a left end of the first operating device mounting portion in substantial correspondence with a left side face of the first operating device. Said right leg portion extends downwardly from a right end of the second operating device mounting portion in substantial correspondence with a right side face of the second operating device.

The operating deck also includes: a first member being formed by the driver's seat mounting portion, the first operating device mounting portion and the left leg portion; a second member being formed by the second operating device mounting portion, the right leg portion, a partitioning plate at an end on the side of the first member, an intermediate plate connected to the partitioning plate and the right leg portion and partitioning the partitioning plate and the right leg portion vertically from each other, and a rear face plate disposed on the back faces of the partitioning plate and the intermediate plate; and an accommodating space opened on the front side and formed downwardly of said upper face portion between said right and left leg portions, said accommodating space comprising an air conditioner accommodating space that is formed inside the first member and extends from under the driver's seat to the underside of the first operating device mounting portion, for accommodating an air conditioner, and a space that is formed inside the second member and partitioned from the air conditioner accommodating space by the partitioning wall, the intermediate plate and the rear face plate, for accommodating an electric box.

An end portion of the driver's seat mounting portion of the first member vertically overlaps and interconnects via bolts with an end of the second operating device mounting portion of the second member.

Preferably, in the above-described construction, said first operating device includes an operating box which includes an operating valve; a support bracket attached erect on the upper face of said operating deck supports said operating box via a pivot mechanism such that said first operating device is supported to be pivotable about a horizontal axis from a use posture; said first operating device is disposed on the upper face of said operating deck; and said pivot mechanism is disposed upwardly of the upper face of said operating deck.

Preferably, in the above-described construction, said support bracket includes an attaching portion to be fixed to the upper face of said operating deck, and a supporting portion provided erect from said attaching portion for supporting said operating box; said attaching portion is positioned substantially within a right/left width of said operating box; and a face of said operating box opposite from said driver's seat is adjacent, in the right/left direction, to an end of said operating deck.

Preferably, in the above-described construction, said operating box includes, at a front upper portion thereof, an attaching portion for an operating valve, said attaching portion being attached at three points of the front portion and the rear portion of the operating valve opposite away from the driver's seat, and the rear portion on the side of the driver's seat and said operating box further includes an attaching hole provided on the side of the driver's seat and on the front side.

Preferably, in the above-described construction, said second operating device includes a first valve and a second valve in an operating bracket; said operating bracket includes a plurality of projecting portions projecting to the lateral side from a vertical wall provided erect on said operating deck; and said plurality of projecting portions function as an attaching portion for attaching said first valve and said second valve from the right and left sides.

Preferably, in the above-described construction, said projecting portions are formed as projections integral with said vertical wall to the side of said driver's seat; the attaching portion of said first valve includes an attaching opening at a front portion thereof on the side of the driver's seat; and the attaching portion of said second valve includes an attaching opening at a side portion on the side of the driver's seat.

According to the above-described construction, since the driver's seat, the first operating device and the second operating deice are mounted independently of each other on the respective mounting portions provided in the upper face of the operating deck, these components can be assembled from above the operating deck and the operating deck can have a large right/left width and the space under the first and second operating devices can be effectively utilized as a large accommodating space for accommodating a large vehicle instrument.

The operating deck can be formed simple of two members, and respective interiors thereof can be utilized as an accommodating space for an air conditioner and an accommodating space for an electric switch box.

Therefore, it is possible to mount the driver's seat, the left operating device and the right operating device constructed independently of each other, on the upper face of the operating deck. A large vehicle instrument can be accommodated within the interior of the operating deck. The maintenance of the right and left operating devices can be easily carried out. And, the spaces downwardly thereof can be effectively utilized.

Further, according to the above-described construction, if the support bracket is mounted erect on the upper face of the operating deck and the operating devices are disposed on the upper face of the operating deck and the pivot mechanism is disposed upwardly of the upper face of the operating deck, attachment of the operating devices can be done from above the operating deck so that maintenance operations of the operating valves, the pivot mechanism, etc. can be easily carried out.

If said attaching portion is positioned substantially within a right/left width of said operating box; and a face of said operating box opposite from said driver' seat is adjacent, in the right/left direction, to an end of said operating deck.

Further, if the support bracket includes an attaching portion which is located substantially within the right/left width of the operating box and the face of the operating box opposite from the side of the driver's seat is adjacent, in the right/left direction, to the lateral end of the operating deck, the right/let width of the operating devices can be minimized and no dead space is formed downwardly thereof and can be arranged in a compact manner.

If an attaching portion for the operating valve is provided at a front upper portion of the operating box and this attaching portion forms an attaching opening, then, through this attaching opening, the operating valve can be attached to the attaching portion from the front side of the driver's seat. Thus, attachment and detachment of the operating valve and the maintenance thereof can be carried out extremely easily.

As a result, the attaching and detachment and maintenance of the operating devices, the operating valve, the pivot mechanism, etc. can be carried out easily and also the area occupied by the operator's section can be compact.

Further, as the operating bracket attaches the first valve and the second valve with the plurality of projections projecting from the vertical wall provided erect on the operating deck to the lateral side, the first valve and the second valve are supported in the cantilever manner, so that the valves can be attached/detached from the lateral side. Hence, the attachment/detachment and maintenance of the first and second valves can be carried out easily, and the area occupied by the operator's section can be compact.

When the operating bracket is formed with integral formation of the vertical wall and the plurality of projections, the manufacture thereof can be easy. And, as the attaching openings are formed respectively in the attaching portion of the first valve and the attaching portion of the second valve, the first valve and the second valve can be easily inserted or withdrawn not from the vertical direction, but from the lateral direction, so the maintenance becomes easy.

As the operating devices are attached from above to the upper face of the operating deck, attachment and detachment of the operating devices can be carried out easily and no dead space is formed downwardly of the operating devices and the space occupied by the operator's section can be formed compact.

Therefore, the attachment and detachment of the first valve and the second valve relative to the operating bracket and the maintenance thereof can be carried out easily.

### [Brief Description of the Drawings]

[Fig. 1] a front view showing an embodiment of the invention,
[Fig. 2] a plan view of the same,
[Fig. 3] a perspective view of the principal portions of the same,
[Fig. 4] a left side view of the same,
[Fig. 5] a right side view of the same,
[Fig. 6] a front view of an operating deck,
[Fig. 7] a plan view of the operating deck,
[Fig 8] a right side view of a left operating device,
[Fig. 9] a left side view showing inner construction of the left operating device,
[Fig. 10] an enlarged left side view showing the inner construction of the left operating device,
[Fig. 11] a left side view showing a condition when the left operating device is pivoted upward,
[Fig. 12] a plan view showing the inner construction of the left operating device,
[Fig. 13] a front view showing the inner construction of the left operating device,
[Fig. 14] a perspective view of a pivot mechanism,
[Fig. 15] a perspective view of a right operating device,
[Fig. 16] a right side view showing an operating bracket of the right operating device,
[Fig. 17] a perspective showing the operating bracket,
[Fig. 18] an overall perspective view of an operator's section,
[Fig. 19] an overall plan view of a swiveling work vehicle, and
[Fig. 20] an overall side view of the swiveling work vehicle.

### [Embodiments of the Invention]

Next, embodiments of the present invention will be described with reference to accompanying drawings.

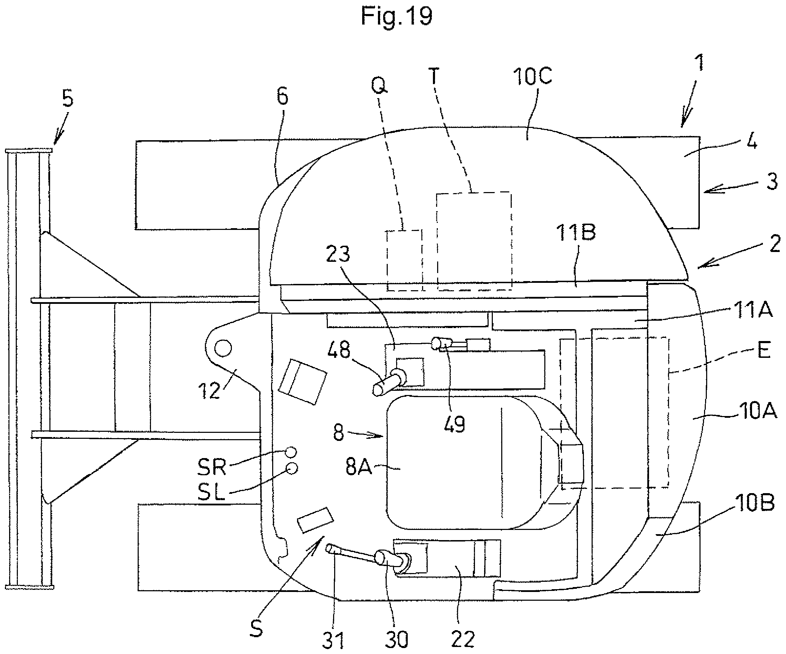

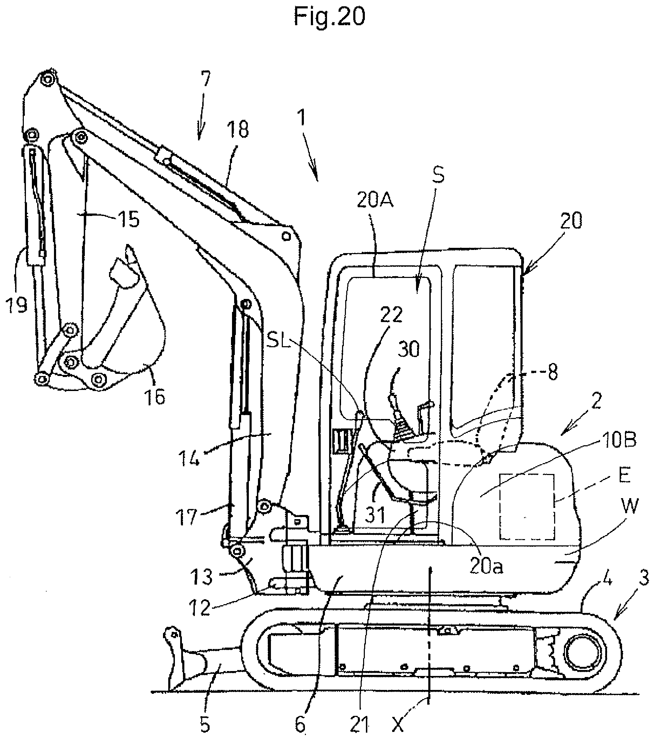

In Fig. 19 and Fig. 20, numeral 1 denotes a backhoe as an example of a work vehicle (swiveling work vehicle). This backhoe 1 includes an upper swiveling body (upper structure member) 2, a traveling device 3 provided downwardly of the swiveling body 2, a dozer device 5 as an implement attached to the front portion of the traveling device 3, and an excavator device 7 as an implement attached to the front portion of the swiveling body 2.

The traveling device 3 is constructed as a crawler type traveling device wherein crawler traveling units 4 are mounted on the right and left sides and drive wheels of the right and left crawler traveling units 4 are driven respectively by hydraulic motor. Each crawler traveling unit 4 includes an idler disposed on one of front and rear sides, a drive wheel disposed on the other of the front and rear sides, a plurality of track rollers disposed between the idler and the drive wheel, and a crawler bent entrained about these.

The dozer device 5 is pivotally attached to the front portion of the traveling device 3 to be vertically pivotable relative thereto by means of a dozer cylinder comprised of a hydraulic cylinder.

The swiveling body 2 includes a swivel deck (machine body) 6 which is supported on the traveling device 3 to be swivellable about a vertical axis S by means of a hydraulic swiveling motor. And, substantially at the front/rear center on this swivel deck 6, a driver's seat 8 is disposed and at a rear portion of the swivel deck 6, an engine E is mounted. At a right portion on the swivel deck 6, there are mounted an operational oil tank T and a control valve Q. Between the operational tank T and the driver's seat 8, there is provided a lateral partitioning wall 11B. On the right and left sides of the driver's seat 8, there are disposed operating devices 22, 22 respectively.

To the front portion of the swivel deck 6, the excavator device 7 is attached. And, in order to obtain good weight balance relative to this excavator device 7, etc., at the rear portion of the swivel deck 6, there is mounted a counter weight W, in addition to the engine E.

An engine room housing therein the engine E, the hydraulic pump, an air cleaner, etc. disposed at the rear portion of the swivel deck 6 is sectioned by a front/rear partitioning wall 11A having the front side thereof fixed between the engine room and the driver's seat 8. And, rear and left sides thereof are covered by a rear hood 10A and a left cover 10B, etc.

A tank room housing therein the operational oil tank T on the right side, the control valve Q, a radiator, etc. 6 is sectioned by the lateral partitioning wall 11B having the left side thereof fixed between the room and the driver's seat 8. And, upper, front and right sides thereof are covered by a right cover 10C respectively.

The excavator device 7 includes a boom 14 supported to a pivot bracket 13 to be vertically pivotable relative thereto, an arm 15 having a base end portion thereof pivotally supported to the leading end of the boom 14, and a bucket 16 attached to the leading end of the arm 15 to be capable of scooping/dumping actions. And, these components are operable by means of a boom cylinder 17, an arm cylinder 18, and a bucket cylinder 19 each of which is comprised of a hydraulic cylinder.

In the excavator device 7, a swing bracket 13 is supported to a support bracket 12 affixed to the front portion of the swivel deck 6 to be pivotable to the right or left about a vertical axis. And, this swing bracket 13 is pivoted to the right or left by means of a hydraulic swing cylinder.

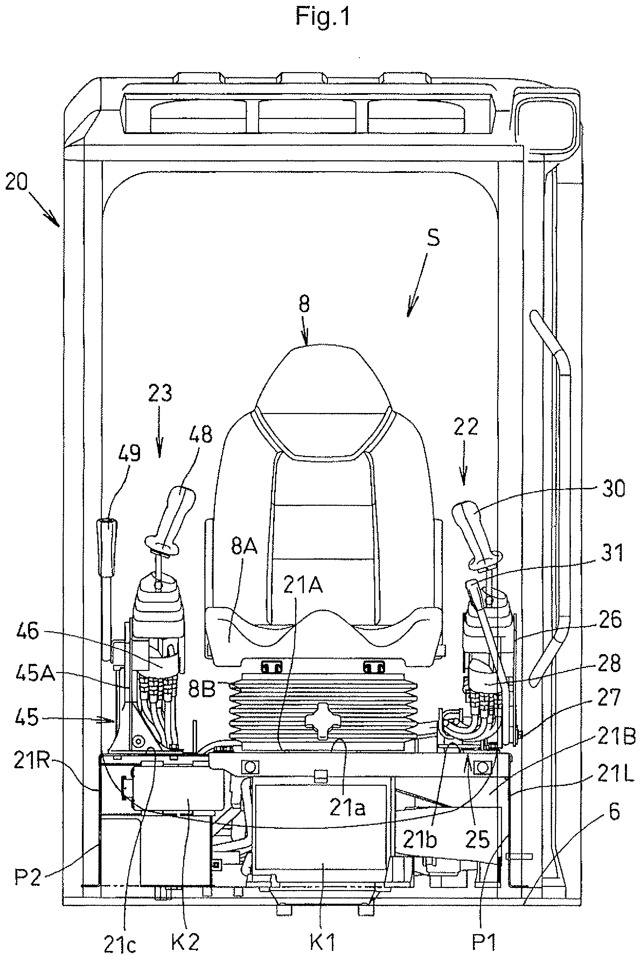

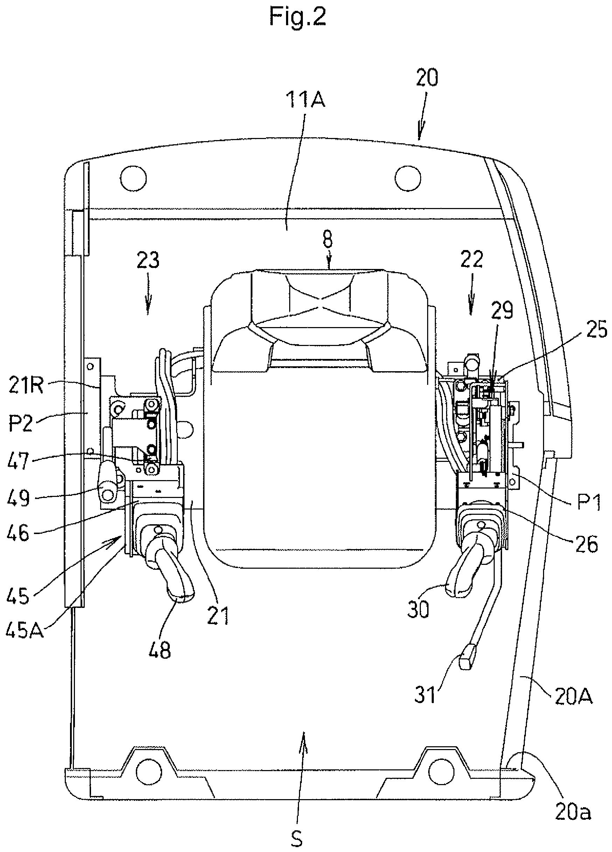

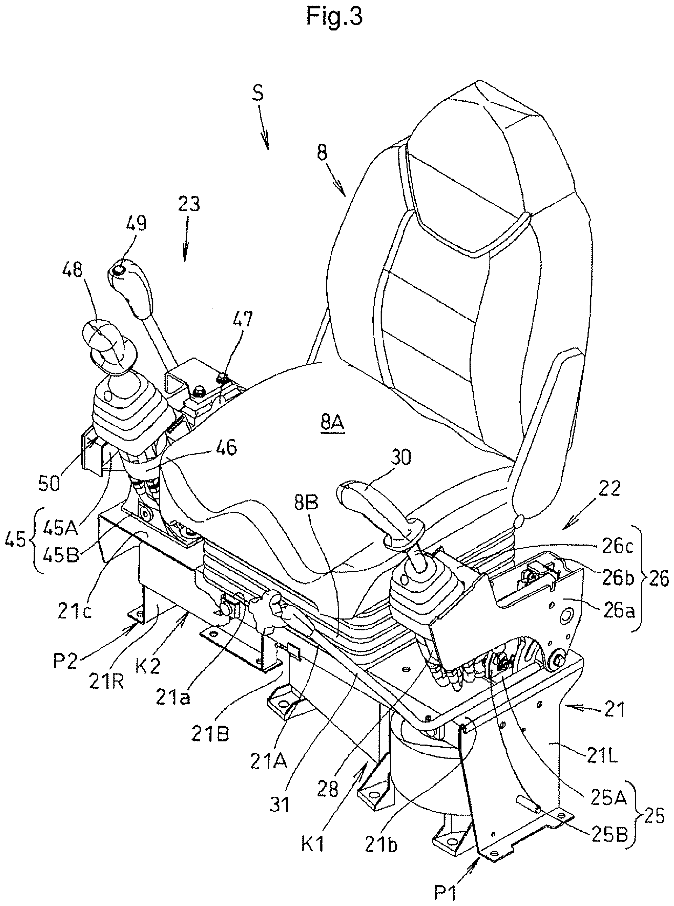

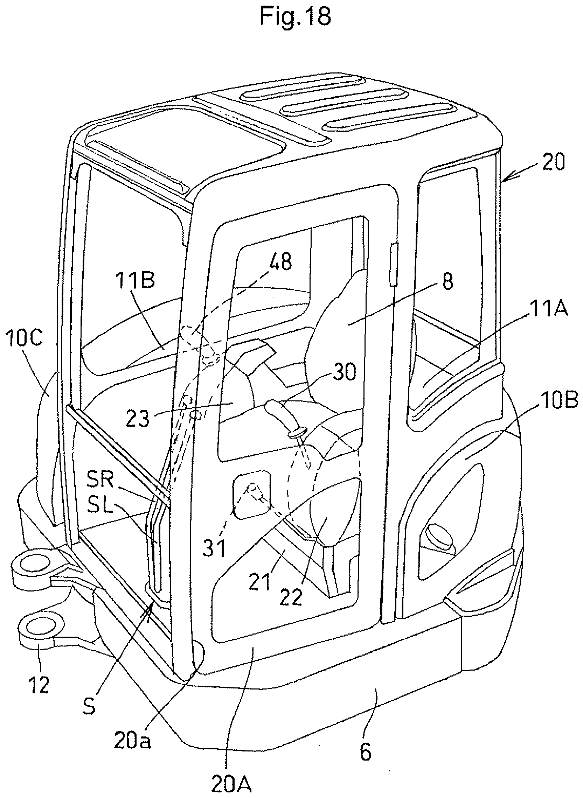

In Figs. 1-3 and 18-20, an operator's section S on the swivel deck 6 is partitioned by the front/rear partitioning wall 11A and the lateral partitioning wall 11B. The driver's seat 8 is disposed forwardly of the front/rear partitioning wall 11A and on the left side of the lateral partitioning wall 11B. Forwardly of the driver's seat 8, there are disposed a pair of left and right traveling operating levers SL, SR for operating the left and right crawler traveling units 4 individually or simultaneously. And, at the right and left foot portions, pedals are disposed.

A cabin 20 surrounding the operator's section S is mounted on the swivel deck 6. This cabin 20 has its rear lower portion formed of the front/rear partitioning wall 11A. The right side wall of the cabin 20 exists, but can be formed of the lateral partitioning wall 11B instead. At an entrance/exit 20a of the cabin 20, there is provided a door 20A which can be opened and closed.

Instead of the cabin 20, a two-column type ROPS or a four-column type canopy (driver's seat protecting device with sunshade) may be mounted.

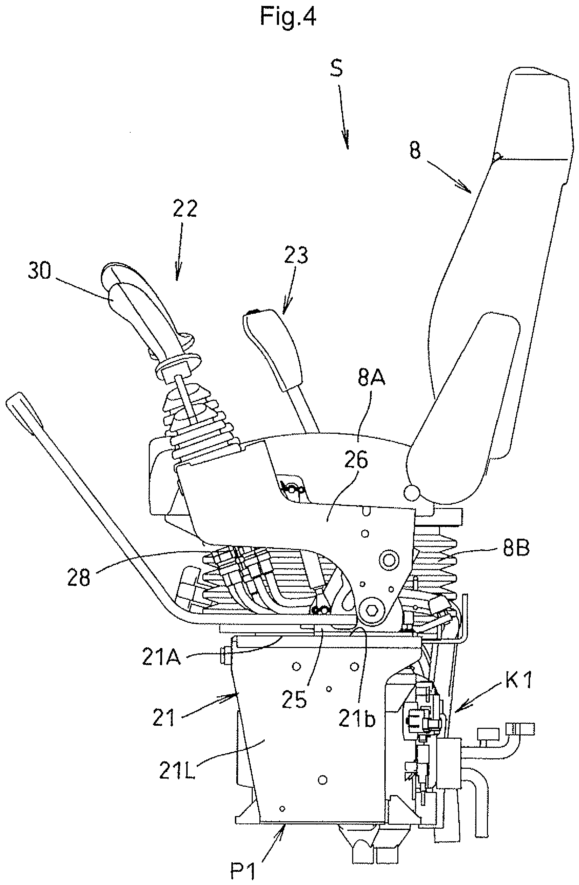

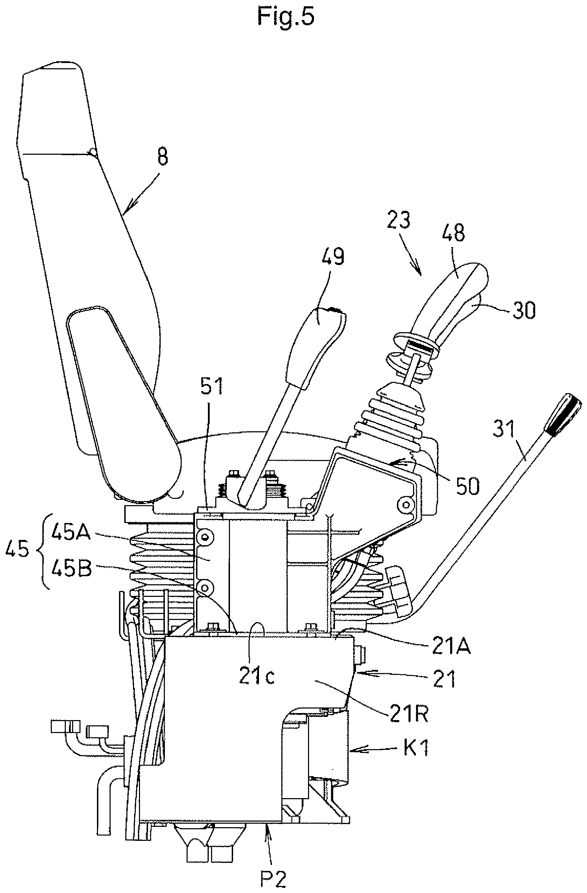

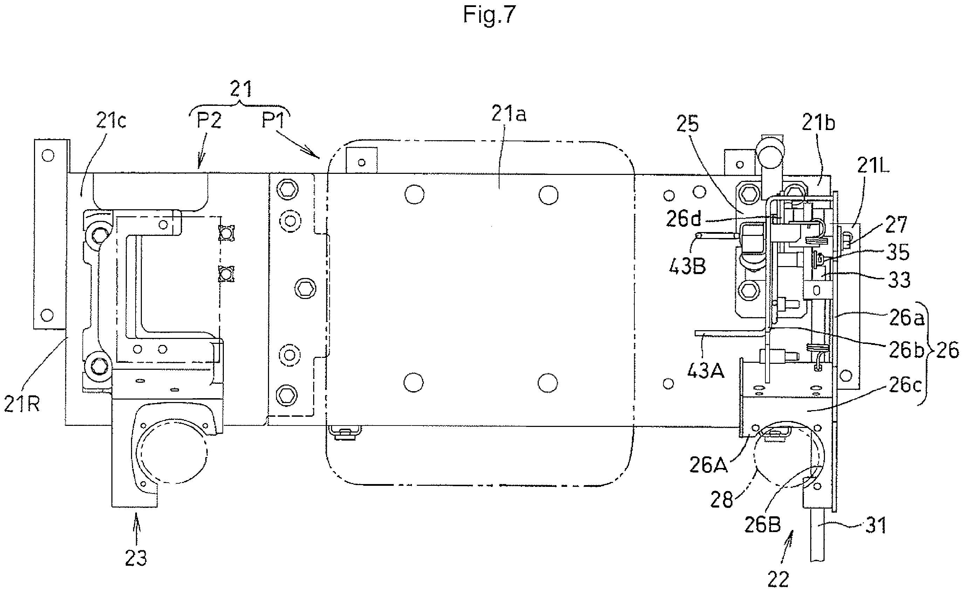

In Figs. 1-7, in the operator's section S, an operating deck 21 is provided on the swivel deck 6 and on this operating deck 21, the driver's seat 8 and the right and left operating devices 22 and 23 are mounted. The driver's seat 8, the left operating device 22 and the right operating device 23 are constructed and assembled independently of each other.

In its front view, the operating deck 21 has a rectangular shape with its lower side open and includes a substantially flat upper face portion 21A and left and right leg portions 21L, 21R, and a front-opened accommodating space 21B being formed downwardly of the upper face portion 21A and between the left and right leg portions 21L, 21R, and this accommodating space 21B accommodates therein a vehicle instrument K.

In the upper face of the operating device 21, there are formed a mounting portion 21a for the driver's seat 8, a mounting portion 21b for the left operating device 21 and a mounting portion 21c for the right operating device 23. On these mounting portions 21a-21c, the driver's seat 8, the left operating device 22 and the right operating device 23 are mounted respectively and fixed thereto by means of fastening members such as bolts. In the driver's seat 8, the bottom face of a sheet 8A has a right/left width greater than a cushioning member 8B.

The left leg portion 21L corresponds substantially to the left side face of the left operating device 22 and the right leg portion 21R corresponds substantially to the right side face of the right operating device 23. The entire area from the left side face of the left operating device 22 to the right side face of the right operating device 23 is formed on the operating deck 21.

That is to say, the left operating device 22 is disposed on the left side of the driver's seat 8 and the opposite side face thereof away from the driver's seat 8 is adjacent, in the right/left direction, to the left end portion of the operating deck 21 and the right operating device 23 is disposed on the right side of the driver's seat 8 and the opposite side face thereof away from the driver's seat 8 is adjacent, in the right/left direction, to the right end portion of the operating deck 21
The operating deck 21 is formed of a metal plate and includes a first member P1 having the driver's seat mounting portion 21a, the left operating device mounting portion 21b (one of the operating device mounting portions) and the left leg portion 21L (one of the leg portions), and a second member P2 having the right operating device mounting portion 21c (the other operating device mounting portion) and the right leg portion 21R (the other leg portion), with an end portion of the driver's seat mounting portion 21a of the first member P1 being vertically overlapped and interconnected via bolts or the like, with an end of the right operating device mounting portion 21c of the second member P2.

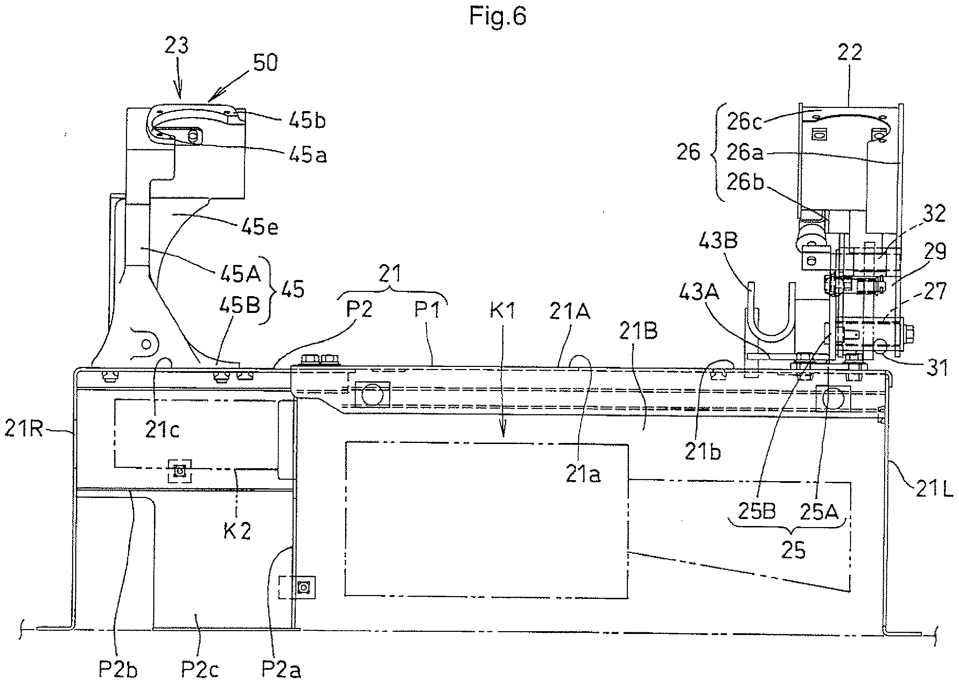

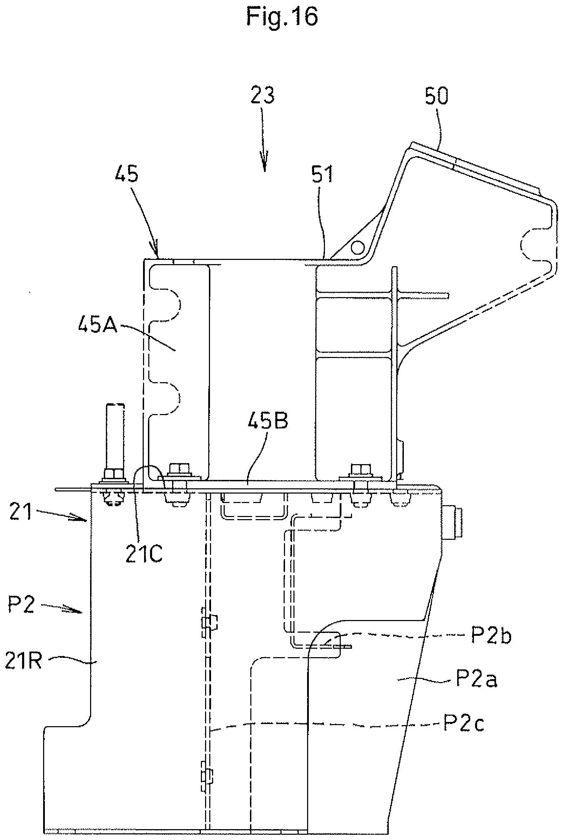

The second member P2 includes a partitioning plate P2a at the end on the side of the first member P1, an intermediate plate P2b connected to the partitioning plate P2a and the right leg portion 21R and partitioning these vertically from each other, and a rear face plate P2c disposed on the back faces thereof (shown in Fig. 6 and Fig. 16), thereby dividing the accommodating space 21B into the space inside the first member P1 and the space inside the second member P2. The space inside the first member P1 accommodates an air conditioner K1 as a vehicle instrument K, whereas the space inside the second member P2 accommodates an electric box K2 holding therein relays, fuses, etc. And, the space inside the second member P2 can further accommodate therein other vehicle instrument K.

The accommodating space 21B inside the first member P1 is formed as a large space extending from under the driver's seat 8 to the underside of the left operating device 22, so this space is capable of accommodating a large component such as the air conditioner K1. Whereas, the accommodating space 21B inside the second member P2 is partitioned from the air conditioner K1 accommodating space by the partitioning wall P2a, the intermediate plate P2b and the rear face plate P2c, so this space provides an optimal space for storing the electric box K2 or any other instrument or device which should not be exposed to water or moisture.

The left operating device 22 is pivotable upward via a pivot mechanism 29, for the following reason. Namely, the left side (the obliquely left front side of the driver's sat, namely, the front side of the left operating device 22) of the driver's seat 8 is constructed as an entrance/exit 20a. So, in order not to interfere with a driver's entrance or exit, the left operating device 22 is pivoted upward for its retraction to ensure the entrance/exit 20a wide-open.

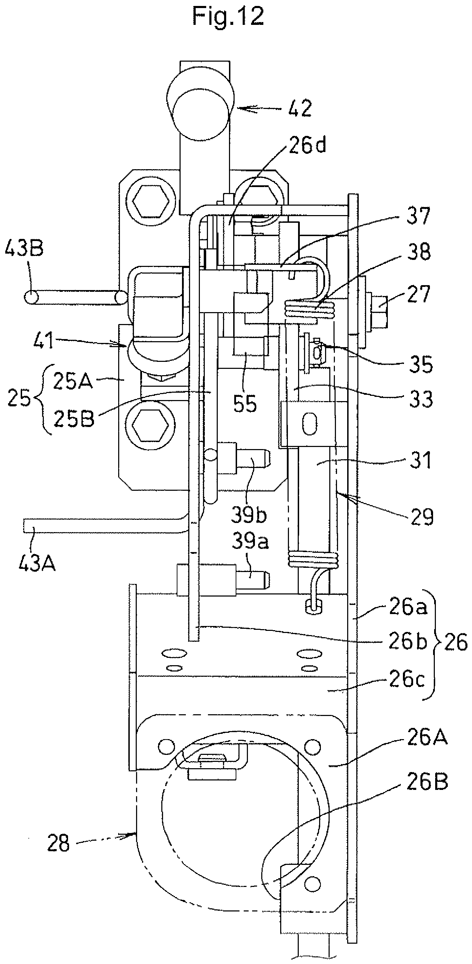

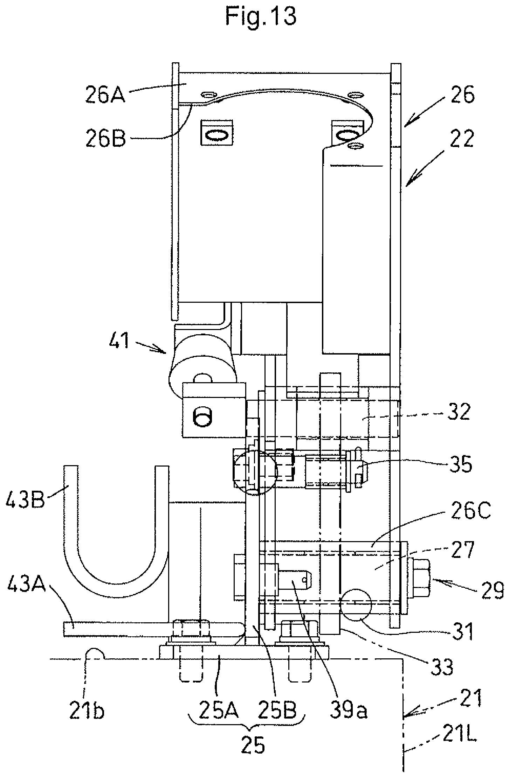

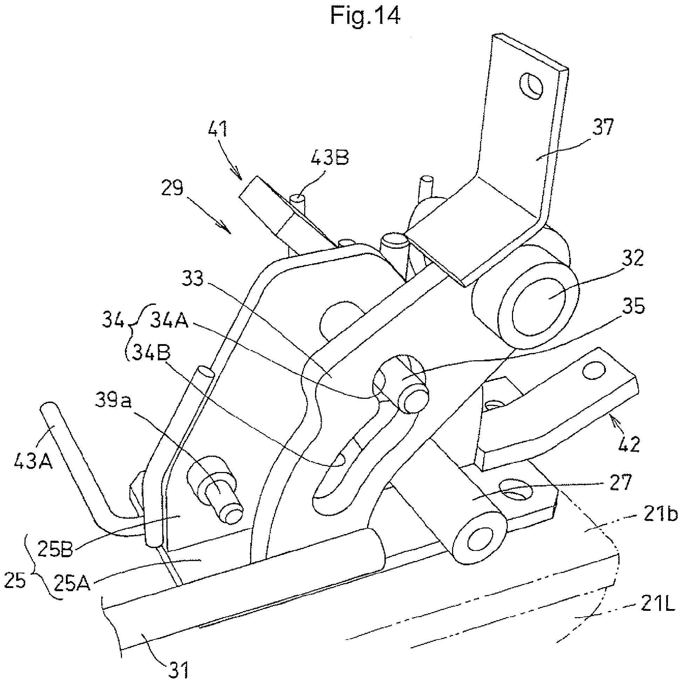

In Figs. 1-4 and 6-14, the left operating deice 22 supports, via a horizontal shaft 27, an operational box 26 to the operating deck 21 and in this operating box 26, a left operating valve 28 and the pivot mechanism 29 are provided.

The support bracket 25 has an approximately inverted T-shape in its front view and includes a horizontal attaching portion 25A, and a supporting portion 25B provided erect from a right/left intermediate portion of this attaching portion 25A, with the attaching portion 25A being mounted on and fixed to the upper face portion 21A of the operating deck 21. The attaching portion 25A of the support bracket 25 and the pivot mechanism 29 are located within the right/left width of the operating box 26 and the pivot mechanism 29 is disposed upwardly of the attaching portion 25A.

The operating box 26 is provided in the form of a box by welding a right plate member 26b forming the right wall and the rear wall to a left plate member 26a forming the left wall, fixedly attaching an attaching plate 26c to the front portions of these plate members, and fixedly attaching a bearing plate 26d to the inner face of the right wall of the right plate member 26a, and the left side face of the left plate member 26a being substantially flush or adjacent, in the right/left direction, to the left leg portion 21L of the operating deck 21. The spacing between the left and right plate members 26a, 26b is shorter than the width of the attaching plate 26c.

Referring to the operating box 26, the front upper attaching plate 26c forms an attaching portion 26A for the left operating valve 28 and this attaching portion 26A being attached at three points of the left front portion (front end portion opposite away from the driver's seat 8), the left rear portion and the right rear portion and a right front opened attaching hole 26B is provided from the left front portion to the right rear portion, so that through this attaching opening 26B, the left operating valve 28 can be inserted or withdrawn from the front right side which is the side of the driver's seat 8. The left operating valve 28 is a swivel/arm operating pilot valve, which is operated by the left operating lever 30.

At the support portion 25B of the support bracket 25, there is provided a horizontal shaft 27 having a right/left axis; and at a rear lower potion of the operating box 26 of the left operating lever 22, the left plate member 26a and the bearing plate 26d together form a boss portion 26, and this boss portion 26 is fitted on the horizontal shaft 27 to be pivotable about a right/left axis. So, the horizontal shaft 27 functions as a pivot support shaft for the left operating device 22.

Further, at a rear portion of the operating box 26, a base portion of a cam member 33 is pivoted via a pivot shaft 32. And, to the leading end of this cam member 33, a base portion of an unload lever 31 is fixed. The unload lever 31 extends from the vicinity of the support portion 25B forwardly and upwardly of the operating box 26, so as not to interfere with passenger's entrance/exit.

The cam member 33 defines a cam groove 34 extending from the base end portion to the leading end of the member 33, and from the support portion 2B of the support bracket 25, a guide pin 5 having a right/left axis projects and the cam groove 34 is engaged with this guide pin 35 via a cam follower.

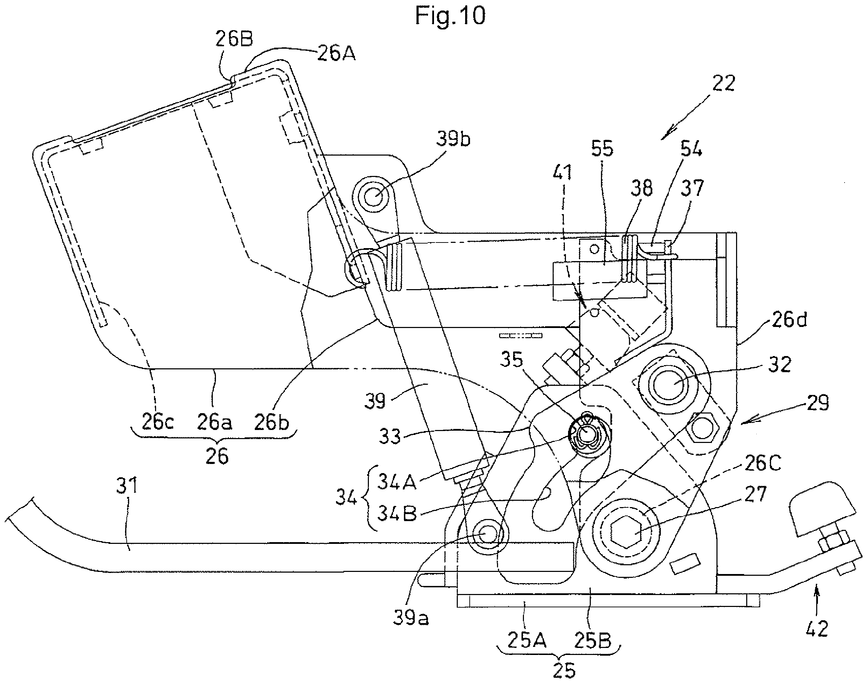

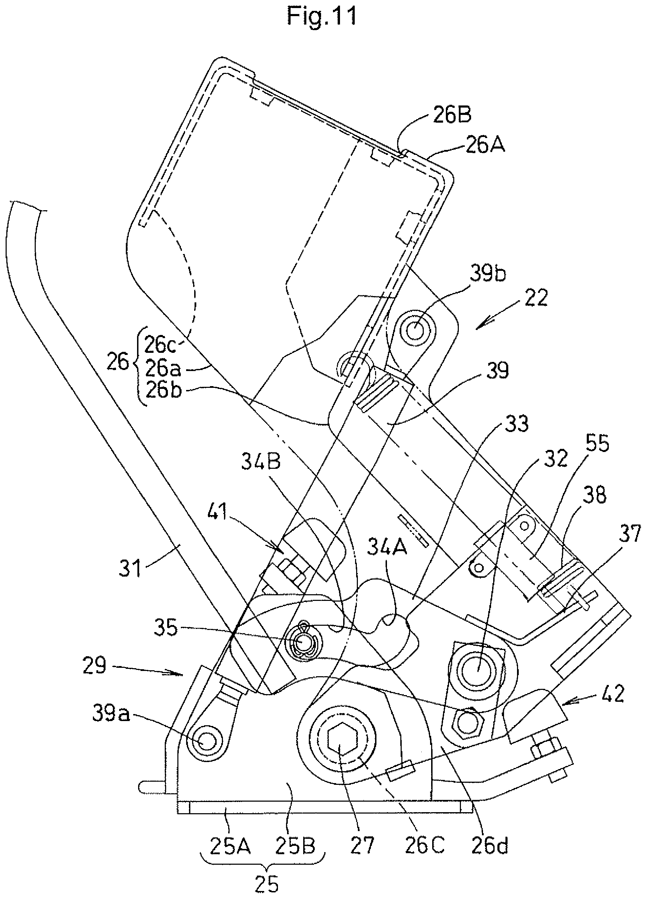

In the cam groove 34, a first cam groove 34A formed on the base side and a second cam groove 34B extending from the first cam groove 34A to the leading end are formed continuously. The first cam groove 34A is formed like an arc centering about the axis of the pivot shaft 32 and the second cam groove 34B is formed like an arc centering about the axis of the horizontal shaft 27 when the unload lever 31 is pivoted from the position shown in Fig. 10 to the position shown in Fig. 11.

The pivot shaft 32 is positioned rearwardly and upwardly of the horizontal shaft 27 and the guide pin 35 is positioned forwardly and upwardly of the horizontal shaft 27 and at a position intermediate between the pivot shaft 32 and the horizontal shaft 27. So, the cam member 33 extends forwardly and downwardly from the pivot shaft 32 and the cam groove 34 is formed with a length which allows a necessary angular, e.g. 50 degree fore/aft pivotal movement of the operating box 26.

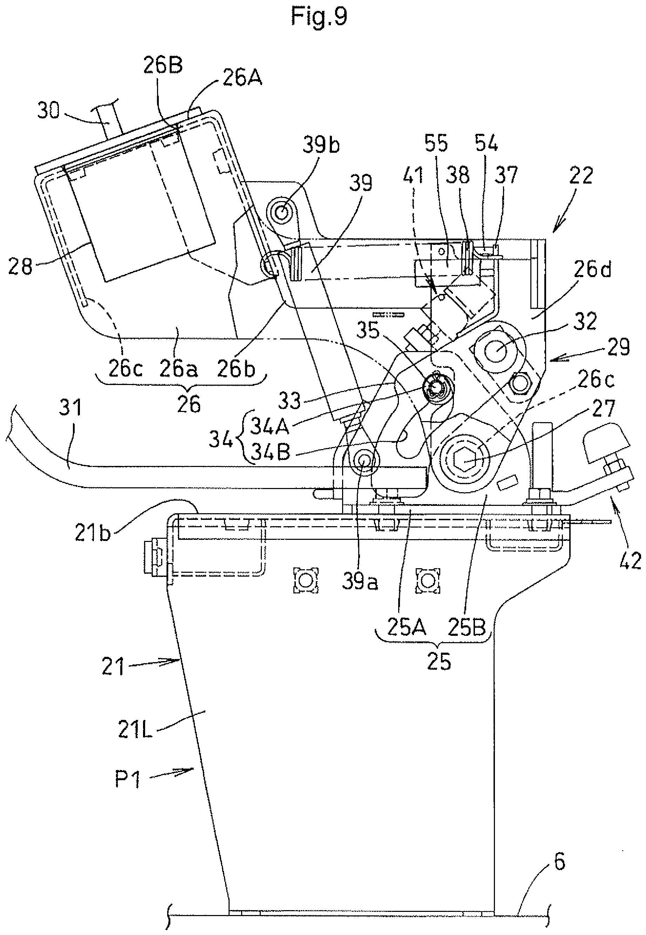

At the base portion of the cam member 33, a stay 37 is provided erect, and between this stay 37 and the attaching plate 26c of the operating box 26, a return spring 38 is incorporated to be contactable with a stopper 54 provided in the right plate member 26a. And, by the return spring 38, the unload lever 31 is urged in the depressing direction (the counterclockwise direction in Figs. 9-11).

At an upper portion of the bearing plate 26d fixed to the right plate member 26a, there is provided a pivot detecting means 55 comprised of a limit switch. And, a switch piece of this pivot detecting means 55 is engaged to the stay 37.

The pivot detecting means 55 is connected to electronic controlling sections of the left and right operating devices 22, 23. In response to from ON to OFF change thereof, unload valves incorporated within hydraulic circuits of the left and right operating devices 22, 23 are operated.

More particularly, when the unload lever 31 is pulled up, so that the guide pin 35 is relatively moved within the first cam groove 34A from its base end to its leading end (the side of the second cam groove 34B), in association with the movement of the stay 37, the switch piece of the pivot detecting means 55 projects, thereby to detect pushing-up of the unload lever 31 (unloading condition), thus disabling operations of the swivel, arm, boom, bucket by the left and right operating devices 22, 23.

Further, between the support portion 25B of the support bracket 25 and the operating box 26, there is provided, via pins 39a, 38b, a gas damper 39 for assisting the upward pivotal movement of the left operating device 22, and there are provided also use position contacting means 41 and avoiding position contacting means 42 comprised of a cushion and a contacting portion.

Also, on the face of the support bracket 25 on the side of the driver's seat 8, there are provided first and second guiding members 43A, 43B for guiding a hose to be connected to the left operating valve 28. These guiding members 43A, 43B project beyond the attaching portion 25A of the support bracket 25 toward the driver's seat 8. However, since the cushioning member 8B has a right/left width shorter than the seating face of the seat 8A, the guiding members provide no interference to disposing the left operating device 22 in the vicinity of the seat 8A.

The horizontal shaft 27,the cam member 33, the unload lever 31, the return spring 38, the pivot detecting means 55, the use position contacting means 41 and the avoiding position contacting means 42, etc. together constitute the pivot mechanism 29.

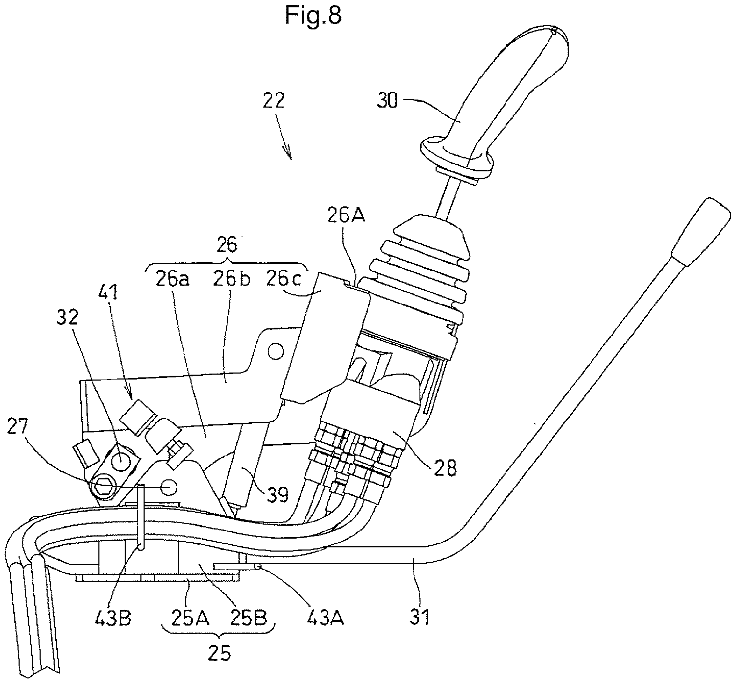

With the left operating device 22 having the above-described construction, the condition shown in Figs. 8-10 is the use position (normal working position) for working with the backhoe 1. At this use position, the guide pin 35 is located at the base end of the first cam groove 34A and the unload lever 31 is prevented from being pivoted in the counter clock direction in Figs. 8-10 by a stopper 54. Also, the guide pin 35 restricts pivotal movement of the operating box 26 (the left operating device 22) about the horizontal shaft 27 (in particularly, its upward pivotal movement).

Further, at the use position, if the unload lever 31 is not being operated, this unload lever 31 is located at the unload release position and the pivot detecting means 55 detects no upward pivotal movement. Under this condition, if the swivel/arm operating left operating lever 30 is operated, the swiveling of the swivel deck 6 and lift up/down of the arm 16 are allowed and operations by the boom/bucket operating right operating lever 23 are also allowed.

From the use position described above, if the unload lever 31 pivots the cam member 33 clockwise in Figs. 8-10 and the guide pin 35 is relatively positioned at the crossing portion between the first cam groove 34A and the second cam groove 34B, the guide pin 35 comes into engagement with the second cam groove 34B in the form of arc centering about the axis of the horizontal shaft 27, so that upward pivotal movement of the operating box 26 about the horizontal axis 27 is allowed and the pivot detecting means 55 is turned OFF, so the unload condition by the unload lever 31 is detected.

After the unload lever 31 has assumed the unload condition, if this lever is further upwardly pivoted together with the operating box 26, the left operating device 22 assumes the upward pivoted position shown in Fig. 11, thus being upwardly retracted to keep the entrance/exit 20a wide open.

Under this upwardly pivoted condition, even if the swivel/arm operating left operating lever 30 is operated, operations of the swivel deck 6 and the arm 15 are inhibited and even if the boom/bucket operating right operating device 23 is operated, operations of the boom 14 and the bucket 16 are inhibited.

When the unload lever 31 is pushed up from the use position to the unload condition, until a gas damper 39 becomes its maximum extended condition, the upward pivotal movement of the operating box 26 about the horizontal shaft 27 is assisted. And, the lever is retained at the avoiding position by the avoiding position contacting means 42.

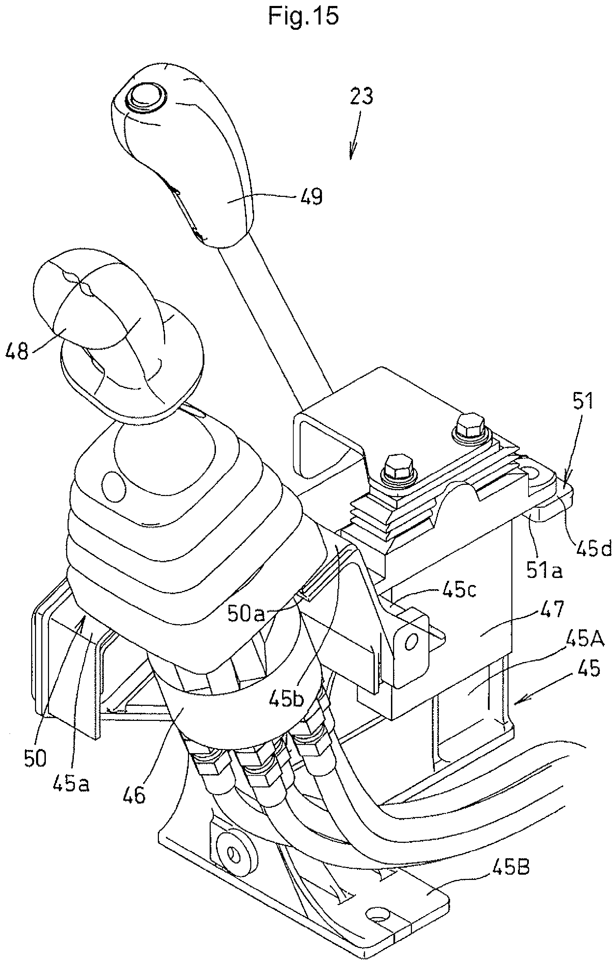

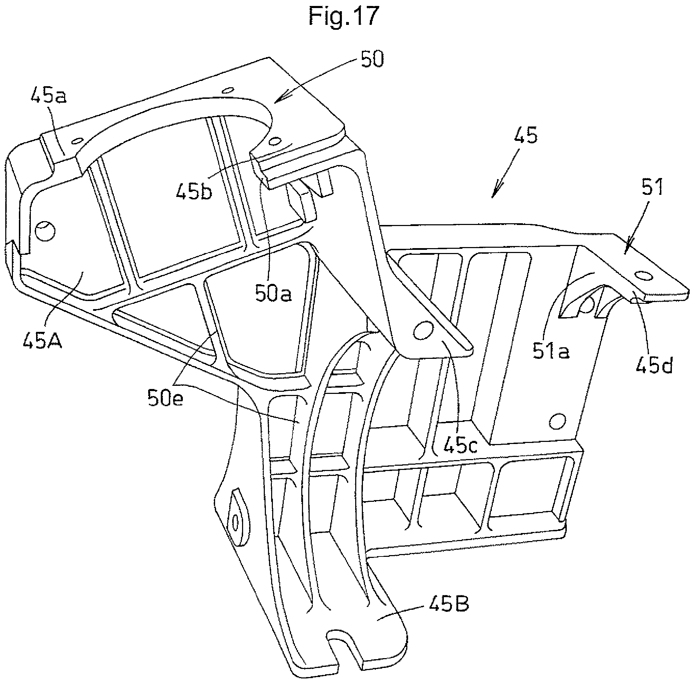

In Figs. 1-3, 5-7 and 15-17, in the right operating device 23, the operating bracket 46 includes the operating valve (first valve) 46 and the implement operating valve (second valve) 47, and the right operating valve 46 is operable by the right operating lever 48 and the implement operating valve 47 is operable by the implement operating lever 49, respectively.

The operating bracket 45 includes a vertical wall 45A and a lower attaching portion 45B, with the attaching portion 45B being placed, from above, on the right operating device mounting portion 21c provided in the upper face of the operating deck 21 and bolt-fixed thereto.

The vertical wall 45A mounted erect on the operating deck 21 includes a plurality of projections 45a-45d projecting from the upper portion thereof to one lateral side, i.e. toward the driver's seat 8. The upper face of the vertical wall 45A and the projections 45a, 45b together form a first attaching portion 50 for attaching the right operating valve 46, whereas, the upper face and the projections 45c, 45d together form a second attaching portion 51 for attaching the implement operating valve 47.

Referring to the operating bracket 45, the attaching portion 46B, the vertical wall 45A and the plurality of projections 45a-45d are integrally formed by die-casting. The projection 45b and the projection 45c project integrally, though a step being formed therebetween. On the face of the vertical wall 46A on the side of the driver's seat 8, a number of reinforcing rib projections 50e are formed vertically and laterally, downwardly of the projections 45a-45d.

The right operating valve 46 is a boom/bucket operating pilot valve, so by the right operating lever 48, control valves for the boom cylinder 17 and the bucket cylinder 19 can be controlled. The implement operating valve 47 is a dozer device 5 operating pilot valve, so that by the implement operating lever 49, the control valve for the dozer cylinder can be controlled.

Referring to the operating bracket 46, as the rib projections 50e are provided for reinforcement, although this bracket is provided as a cantilever construction having only the vertical wall 45A, sufficient strength can be ensured, even if the bracket is not provided in the form of a box. Further, as the bracket is formed by die-casting, there occurs no generation of burr or cutting burr which would be generated in the case of forming by plate metal. Hence, it is possible to reduce damage to the hose to be connected to the valves and the rib projections 60e function like hose guides.

The first attaching portion 50 of the right operating valve 46 includes an attaching opening 50a at the front portion thereof on the side of the driver's seat 8, so that the right operating valve 46 can be inserted or withdrawn from the side of the driver's seat 8; and the second attaching portion 51 of the implement operating valve 47 includes an attaching opening 51a on the lateral side of the driver's seat 8, so that the implement operating valve 47 can be inserted or withdrawn from the lateral side of the driver's seat 8.

That is to say, the right operating valve 46 and the implement operating valve 47 can be attached/detached, not in the vertical direction, but from the right/left side, relative to the operating bracket 46, with the hoses being kept connected thereto.

The assembly, replacement and maintenance of the right operating valve 46 and the implement operating valve 47, etc. can be carried out, with the operating bracket 46 and the driver's seat being kept attached on the operating deck 21.

With the right operating device 22 being disposed as described above, the vertical wall 45A is located adjacent the right leg portion 21R and on the right outer side thereof, the implement operating lever 49 is disposed and immediately above the right left portion 21R, and these compositions are disposed adjacent the right side wall of the cabin 20.

In case, a ROPS device or a canopy device is attached to the backhoe 1 instead of the cabin 20, like the left operating device 22, a pivot mechanism can be provided in the right operating device 23 to be upwardly pivotable by the unload lever.

Incidentally, the shapes, the fore/aft, right/left and upper/lower positional relationships of the respective components are best as shown in Figs. 1-20. However, the present invention is not limited thereto, and it is possible to change or modify the shapes and constructions or change the combinations thereof.

For instance, with the backhoe 1 described above, the tank room of the operational oil tank T or the like is disposed on the right side of the vehicle body 6. Instead, the tank room can be disposed on the left side of the vehicle body 6 and the layouts of the operational tank T and the driver's seat 8 and the arrangements of the left and right operating devices 22, 23 can be in reverse in the right and left direction.

Further, in the above construction, the implement operating lever 49 is disposed on the right side of the vertical wall 45A of the operating bracket 45. Instead, this can be disposed on the left side, like the implement operating valve 47. In this case, the vertical wall 45A can be disposed at the outermost end of the mounting portion 21c of the operating deck 21, that is, immediately above the right leg portion 21R.

In the operating deck 21, the portion thereof from the left leg portion 21L to the right leg portion 21R can be formed by bending a single plate in the form of a one-side open rectangular shape. Also, in the foregoing construction, one partitioning plate P2a is provided at an intermediate portion of the left and right leg portions 21L, 21R. Instead, this plate can be omitted or two or more of the same can be provided.

## Claims

1. An operator's section construction for a work vehicle, with:
an operating deck (21) mounted on a vehicle body (6), the operating deck (21) having a substantially flat upper face portion (21A);
a driver's seat (8) mounted on the operating deck (21);
a first operating device (22, 23) provided on a left side of the operating deck (21); and
a second operating device (22, 23) provided on a right side of the operating deck (21);
wherein on an upper face of the operating deck (21), there are formed a mounting portion (21a) for the driver's seat (8), a mounting portion (21b) for the first operating device (22, 23), and a mounting portion (21c) for the second operating device (22, 23); the driver's seat (8), the first operating device (22, 23) and the second operating device (22, 23) being mounted on the respective mounting portions (21a, 21b, 21c) independently of each other;
**characterized in that** said operating deck (21) includes:
a first member (P1) being formed by:
the driver's seat mounting portion (21a);
the first operating device mounting portion (21b); and
a left leg portion (21L) of the operating deck extending downwardly from a left end of the first operating device mounting portion (21b) in substantial correspondence with a left side face of the first operating device (22, 23);
a second member (P2) being formed by:
the second operating device mounting portion (21c);
a right leg portion (21R) of the operating deck extending downwardly from a right end of the second operating device mounting portion (21c) in substantial correspondence with a right side face of the second operating device (22, 23);
a partitioning plate (P2a) at an end on the side of the first member (P1);
an intermediate plate (P2b) connected to the partitioning plate (P2a) and the right leg portion (21R) and partitioning the partitioning plate (P2a) and the right leg portion (21R) vertically from each other; and
a rear face plate (P2c) disposed on the back faces of the partitioning plate (P2a) and the intermediate plate (P2b); and
an accommodating space (21B) opened on the front side and formed downwardly of said upper face portion (21A) between said right and left leg portions (21R, 21L), said accommodating space (21B) comprising an air conditioner accommodating space that is formed inside the first member (P1) and extends from under the driver's seat (8) to the underside of the first operating device mounting portion (21b), for accommodating an air conditioner (K1), and a space that is formed inside the second member (P2) and partitioned from the air conditioner accommodating space by the partitioning wall (P2a), the intermediate plate (P2b) and the rear face plate (P2c), for accommodating an electric box (K2);
and **in that** an end portion of the driver's seat mounting portion (21a) of the first member (P1) vertically overlaps and interconnects via bolts with an end of the second operating device mounting portion (21c) of the second member (P2).

2. The operator's section construction of claim 1, **characterized in that** said first operating device (22, 23) includes an operating box (26) which includes an operating valve (28); a support bracket (25) attached erect on the upper face of said operating deck (21) supports said operating box (26) via a pivot mechanism (29) such that said first operating device (22, 23) is supported to be pivotable about a horizontal axis from a use posture; said first operating device (22, 23) is disposed on the upper face of said operating deck (21); and said pivot mechanism (29) is disposed upwardly of the upper face of said operating deck.

3. The operator's section construction of claim 2, **characterized in that** said support bracket (25) includes an attaching portion (25A) to be fixed to the upper face of said operating deck (21), and a supporting portion (25B) provided erect from said attaching portion (25A) for supporting said operating box (26); said attaching portion (25A) is positioned substantially within a right/left width of said operating box (26); and a face of said operating box (26) opposite from said driver's seat (8) is adjacent, in the right/left direction, to an end of said operating deck (21).

4. The operator's section construction of claim 2 or 3, **characterized in that** said operating box (26) includes, at a front upper portion thereof, an attaching portion (26A) for an operating valve (28), said attaching portion (26A) being attached at three points of the front portion and the rear portion of the operating valve (28) opposite away from the driver's seat (8), and the rear portion on the side of the driver's seat (8); and said operating box (26) further includes an attaching hole (26B) provided on the side of the driver's seat (8) and on the front side.

5. The operator's section construction of claim 4, **characterized in that** said second operating device (22, 23) includes a first valve (46) and a second valve (47) in an operating bracket (45); and
said operating bracket (45) includes a plurality of projecting portions (45a-45d) projecting to the lateral side from a vertical wall (45A) provided erect on said operating deck (21); and said plurality of projecting portions (45a-45d) function as an attaching portion (50, 51) for attaching said first valve (46) and said second valve (47) from the right and left sides.

6. The operator's section construction of claim 5, **characterized in that** said projecting portions (45a-45d) are formed as projections integral with said vertical wall (45A) to the side of said driver's seat (8); the attaching portion (50) of said first valve (46) includes an attaching opening (50a) at a front portion thereof on the side of the driver's seat (8); and the attaching portion (51) of said second valve (47) includes an attaching opening (51a) at a side portion on the side of the driver's seat (8).

## Patentansprüche

1. Führerstand eines Arbeitsfahrzeugs mit:
einem Führungsdeck (21), das auf einem Fahrzeugkörper (6) befestigt ist, wobei das Führungsdeck (21) einen im Wesentlichen flachen, oberen Flächenabschnitt (21A) aufweist;
einem Fahrersitz (8), der auf dem Führungsdeck (21) befestigt ist;
einer ersten Führungsvorrichtung (22, 23), die auf einer linken Seite des Führungsdecks (21) bereitgestellt ist; und
einer zweiten Führungsvorrichtung (22, 23), die auf einer rechten Seite des Führungsdecks (21) bereitgestellt ist;
wobei auf einer oberen Fläche des Führungsdecks (21) ein Befestigungsabschnitt (21a) für den Fahrersitz (8), ein Befestigungsabschnitt (21b) für die erste Führungsvorrichtung (22, 23) und ein Befestigungsabschnitt (21c) für die zweite Führungsvorrichtung (22, 23) ausgebildet sind; wobei der Fahrersitz (8), die erste Führungsvorrichtung (22, 23) und die zweite Führungsvorrichtung (22, 23) auf den jeweiligen Befestigungsabschnitten (21a, 21b, 21c) unabhängig voneinander befestigt sind;
**dadurch gekennzeichnet, dass** das genannte Führungsdeck (21) Folgendes umfasst:
ein erstes Element (P1), das durch Folgendes ausgebildet ist:
den Befestigungsabschnitt (21a) des Fahrersitzes;
den Befestigungsabschnitt (21b) der ersten Führungsvorrichtung; und
einen linken Schenkelabschnitt (21L) des Führungsdecks, der sich von einem linken Ende des Befestigungsabschnitts (21b) der ersten Führungsvorrichtung in wesentlicher Entsprechung mit einer linken Seitenfläche der ersten Führungsvorrichtung (22, 23) abwärts erstreckt;
ein zweites Element (P2), das durch Folgendes ausgebildet ist:
den Befestigungsabschnitt (21c) der zweiten Führungsvorrichtung;
einen rechten Schenkelabschnitt (21R) des Führungsdecks, der sich von einem rechten Ende des Befestigungsabschnitts (21c) der zweiten Führungsvorrichtung in wesentlicher Entsprechung mit einer rechten Seitenfläche der zweiten Führungsvorrichtung (22, 23) abwärts erstreckt;
eine Trennplatte (P2a) an einem Ende auf der Seite des ersten Elements (P1);
eine Zwischenplatte (P2b), die mit der Trennplatte (P2a) und dem rechten Schenkelabschnitt (21R) verbunden ist und die Trennplatte (P2a) und den rechten Schenkelabschnitt (21R) vertikal voneinander trennt; und
eine hintere Flächenplatte (P2c), die auf den Rückflächen der Trennplatte (P2a) und der Zwischenplatte (P2b) angeordnet ist; und
einen Aufnahmeraum (21B), der auf der vorderen Seite geöffnet und von dem genannten oberen Flächenabschnitt (21A) zwischen dem genannten rechten und linken Schenkelabschnitt (21R, 21L) abwärts ausgebildet ist, wobei der genannte Aufnahmeraum (21B) einen Klimaanlage-Aufnahmeraum beinhaltet, der innerhalb des ersten Elements (P1) ausgebildet ist und sich von unterhalb des Fahrersitzes (8) zu der Unterseite des Befestigungsabschnitts (21b) der ersten Führungsvorrichtung erstreckt, zur Aufnahme einer Klimaanlage (K1), und einen Raum beinhaltet, der innerhalb des zweiten Elements (P2) ausgebildet und von dem Klimaanlage-Aufnahmeraum durch die Trennwand (P2a), die Zwischenplatte (P2b) und die hintere Flächenplatte (P2c) getrennt ist, zur Aufnahme eines Elektrokastens (K2);
und dadurch, dass ein Endabschnitt des Befestigungsabschnitts (21a) des Fahrersitzes (21a) des ersten Elements (P1) ein Ende des Befestigungsabschnitts (21c) der zweiten Führungsvorrichtung des zweiten Elements (P2) vertikal überlappt und über Bolzen mit diesem verbunden ist.

2. Führerstand gemäß Anspruch 1, **dadurch gekennzeichnet, dass** die genannte erste Führungsvorrichtung (22, 23) einen Führungskasten (26) umfasst, der ein Führungsventil (28) umfasst; wobei ein Halteträger (25), der aufrecht auf der oberen Fläche des genannten Führungsdecks (21) angeschlossen ist, den genannten Führungskasten (26) über einen Schwenkmechanismus (29) hält, sodass die genannte erste Führungsvorrichtung (22, 23) gehalten wird, um um eine horizontale Achse herum aus einer Einsatzstellung schwenkbar zu sein; wobei die genannte erste Führungsvorrichtung (22, 23) auf der oberen Fläche des genannten Führungsdecks (21) angeordnet ist; und wobei der genannte Schwenkmechanismus (29) aufwärts von der oberen Fläche des genannten Führungsdecks angeordnet ist.

3. Führerstand gemäß Anspruch 2, **dadurch gekennzeichnet, dass** der genannte Halteträger (25) einen Anschlussabschnitt (25A), der an der oberen Fläche des genannten Führungsdecks (21) zu fixieren ist, und einen Halteabschnitt (25B), der aufrecht von dem genannten Anschlussabschnitt (25A) bereitgestellt ist, zum Halten des genannten Führungskastens (26) umfasst; wobei der genannte Anschlussabschnitt (25A) im Wesentlichen innerhalb einer rechten/linken Breite des genannten Führungskastens (26) positioniert ist; und wobei eine Fläche des genannten Führungskastens (26) gegenüber dem genannten Fahrersitz (8), in der rechten/linken Richtung, an einem Ende des genannten Führungsdecks (21) angrenzt.

4. Führerstand gemäß Anspruch 2 oder 3, **dadurch gekennzeichnet, dass** der genannte Führungskasten (26), an einem vorderen oberen Abschnitt davon, einen Anschlussabschnitt (26A) für ein Führungsventil (28) umfasst, wobei der genannte Anschlussabschnitt (26A) an drei Punkten des vorderen Abschnitts und des hinteren Abschnitts des Führungsventils (28) gegenüber entfernt von den Fahrersitz (8) angeschlossen ist; und wobei der genannte Führungskasten (26) ferner ein Anschlussloch (26B) umfasst, das auf der Seite des Fahrersitzes (8) und auf der vorderen Seite bereitgestellt ist.

5. Führerstand gemäß Anspruch 4, **dadurch gekennzeichnet, dass** die genannte zweite Führungsvorrichtung (22, 23) ein erstes Ventil (46) und ein zweites Ventil (47) in einem Führungsträger (45) umfasst; und
wobei der genannte Führungsträger (45) eine Vielzahl von vorstehenden Abschnitten (45a-45d) umfasst, die zu der seitlichen Seite aus einer vertikalen Wand (45A) vorstehen, die aufrecht auf dem genannten Führungsdeck (21) bereitgestellt ist; und wobei die genannte Vielzahl von vorstehenden Abschnitten (45a-45d) als Anschlussabschnitt (50, 51) zum Anschließen des genannten ersten Ventils (46) und des genannten zweiten Ventils (47) von der rechten und linken Seite fungiert.

6. Führerstand gemäß Anspruch 5, **dadurch gekennzeichnet, dass** die genannten vorstehenden Abschnitte (45a-45d) als Vorsprünge integral mit der genannten vertikalen Wand (45A) zu der Seite des genannten Fahrersitzes (8) ausgebildet sind; wobei der Anschlussabschnitt (50) des genannten ersten Ventils (46) eine Anschlussöffnung (50a) an einem vorderen Abschnitt davon auf der Seite des Fahrersitzes (8) umfasst; und wobei der Anschlussabschnitt (51) des genannten zweiten Ventils (47) eine Anschlussöffnung (51a) an einem Seitenabschnitt auf der Seite des Fahrersitzes (8) umfasst.

## Revendications

1. Construction d'une section d'opérateur pour un véhicule de travail, avec :
une plate-forme de manoeuvre (21) montée sur une carrosserie de véhicule industriel (6), la plate-forme de manoeuvre (21) comportant une partie de face supérieure sensiblement plate (21A);
un siège de conducteur (8) monté sur la plate-forme de manoeuvre (21) ;
un premier dispositif de manoeuvre (22, 23) fourni sur un côté gauche de la plate-forme de manoeuvre (21) ; et
un second dispositif de manoeuvre (22, 23) fourni sur un côté droit de la plate-forme de manoeuvre (21) ;
dans lequel sur une face supérieure de la plate-forme de manoeuvre (21) sont formées une partie de montage (21a) pour le siège de conducteur (8), une partie de montage (21b) pour le premier dispositif de manoeuvre (22, 23), et une partie de montage (21c) pour le second dispositif de manoeuvre (22, 23) ; le siège de conducteur (8), le premier dispositif de manoeuvre (22, 23) et le second dispositif de manoeuvre (22, 23) étant montés sur les parties de montage respectives (21a, 21b, 21c) indépendamment les uns des autres ;
**caractérisé en ce que** ladite plate-forme de manoeuvre (21) comporte :
un premier élément (P1) formé par :
la partie de montage de siège de conducteur (21a) ;
la partie de montage de premier dispositif de manoeuvre (21b); et
une partie de jambe gauche (21L) de la plate-forme de manoeuvre s'étendant vers le bas depuis une extrémité gauche de la partie de montage de premier dispositif de manoeuvre (21b) sensiblement en correspondance avec une face latérale gauche du premier dispositif de manoeuvre (22, 23) ;
un second élément (P2) formé par :
la partie de montage de second dispositif de manoeuvre (21c);
une partie de jambe droite (21R) de la plate-forme de manoeuvre s'étendant vers le bas depuis une extrémité droite de la partie de montage de second dispositif de manoeuvre (21c) sensiblement en correspondance avec une face latérale droite du second dispositif de manoeuvre (22, 23) ;
une plaque de séparation (P2a) à une extrémité sur le côté du premier élément (P1);
une plaque intermédiaire (P2b) connectée à la plaque de séparation (P2a) et à la partie de jambe droite (21R) et séparant la plaque de séparation (P2a) et la partie de jambe droite (21R) verticalement l'une de l'autre ; et
une plaque de face arrière (P2c) disposée sur les faces arrière de la plaque de séparation (P2a) et de la plaque intermédiaire (P2b) ; et
un espace de réception (21B) ouvert sur le côté avant et formé vers le bas de ladite partie de face supérieure (21A) entre lesdites parties de jambe droite et gauche (21R, 21L), ledit espace de réception (21B) comprenant un espace de réception de climatiseur qui est formé à l'intérieur du premier élément (P1) et qui s'étend depuis le dessous du siège de conducteur (8) jusqu'au dessous de la partie de montage de premier dispositif de manoeuvre (21b), pour recevoir un climatiseur (K1), et un espace qui est formé à l'intérieur du second élément (P2) et séparé de l'espace de réception de climatiseur par la paroi de séparation (P2a), la plaque intermédiaire (P2b) et la plaque de face arrière (P2c), pour recevoir un boîtier électrique (K2) ;
et **en ce qu'**une partie d'extrémité de la partie de montage de siège de conducteur (21a) du premier élément (P1) chevauche verticalement une extrémité de la partie de montage de second dispositif de manoeuvre (21c) du second élément (P2) et s'interconnecte avec celle-ci au moyen de boulons.

2. Construction d'une section d'opérateur selon la revendication 1, **caractérisée en ce que** ledit premier dispositif de manoeuvre (22, 23) comporte un boîtier de manoeuvre (26) qui comporte une soupape de fonctionnement (28) ; une potence de support (25) attachée droite sur la face supérieure de ladite plate-forme de manoeuvre (21) supporte ledit boîtier de manoeuvre (26) par l'intermédiaire d'un mécanisme pivot (29) de telle sorte que ledit premier dispositif de manoeuvre (22, 23) soit supporté pour pouvoir pivoter autour d'un axe horizontal à partir d'une position d'utilisation ; ledit premier dispositif de manoeuvre (22, 23) est disposé sur la face supérieure de ladite plate-forme de manoeuvre (21) ; et ledit mécanisme pivot (29) est disposé vers le haut de la face supérieure de ladite plate-forme de manoeuvre.

3. Construction d'une section d'opérateur selon la revendication 2, **caractérisée en ce que** ladite potence de support (25) comporte une partie de fixation (25A) destinée à être fixée à la face supérieure de ladite plate-forme de manoeuvre (21), et une partie de support (25B) fournie droite à partir de ladite partie de fixation (25A) pour supporter ledit boîtier de manoeuvre (26) ; ladite partie de fixation (25A) étant positionnée sensiblement en deçà d'une largeur droite/gauche dudit boîtier de manoeuvre (26) ; et une face dudit boîtier de manoeuvre (26) opposée audit siège de conducteur (8) est adjacente, dans le sens droit/gauche, à une extrémité de ladite plate-forme de manoeuvre (21).

4. Construction d'une section d'opérateur selon la revendication 2 ou 3, **caractérisée en ce que** ledit boîtier de manoeuvre (26) comporte, au niveau d'une partie supérieure avant de celui-ci, une partie de fixation (26A) destinée à une soupape de fonctionnement (28), ladite partie de fixation (26A) étant attachée en trois points de la partie avant et de la partie arrière de la soupape de fonctionnement (28) opposée et écartée du siège de conducteur (8), et de la partie arrière sur le côté du siège de conducteur (8) ; et ledit boîtier de manoeuvre (26) comporte en outre un trou de fixation (26B) fourni sur le côté du siège de conducteur (8) et sur le côté avant.

5. Construction d'une section d'opérateur selon la revendication 4, **caractérisée en ce que** ledit second dispositif de manoeuvre (22, 23) comporte une première soupape (46) et une seconde soupape (47) dans une potence de manoeuvre (45) ; et
ladite potence de manoeuvre (45) comporte une pluralité de parties saillantes (45a-45d) saillant vers le côté latéral depuis une paroi verticale (45A) fournie droite sur ladite plate-forme de manoeuvre (21) ; et ladite pluralité de parties saillantes (45a-45d) fait office de partie de fixation (50, 51) pour fixer ladite première soupape (46) et ladite seconde soupape (47) à partir des côtés droit et gauche.

6. Construction d'une section d'opérateur selon la revendication 5, **caractérisée en ce que** lesdites parties saillantes (45a-45d) sont formées en tant que saillies faisant partie intégrante de ladite paroi verticale (45A) jusqu'au côté dudit siège de conducteur (8) ; la partie de fixation (50) de ladite première soupape (46) comporte une ouverture de fixation (50a) au niveau d'une partie avant de celle-ci sur le côté du siège de conducteur (8) ; et la partie de fixation (51) de ladite seconde soupape (47) comporte une ouverture de fixation (51a) au niveau d'une partie latérale sur le côté du siège de conducteur (8).
